(19) **Europäisches Patentamt**
**European Patent Office**
**Office européen des brevets**

(11) **EP 4 425 462 A1**

(12) **EUROPEAN PATENT APPLICATION**
published in accordance with Art. 153(4) EPC

(43) Date of publication:
**04.09.2024 Bulletin 2024/36**

(21) Application number: **21965185.8**

(22) Date of filing: **26.11.2021**

(51) International Patent Classification (IPC):
**G08G 1/01** (2006.01) **G06F 18/40** (2023.01)

(52) Cooperative Patent Classification (CPC):
**G08G 1/01**

(86) International application number:
**PCT/CN2021/133478**

(87) International publication number:
**WO 2023/092451 (01.06.2023 Gazette 2023/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **YIN, Xiaomeng**
 **Shenzhen, Guangdong 518129 (CN)**

• **WANG, Yi**
 **Shenzhen, Guangdong 518129 (CN)**
• **WANG, Jianguo**
 **Shenzhen, Guangdong 518129 (CN)**
• **CHEN, Mo**
 **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD AND APPARATUS FOR PREDICTING DRIVABLE LANE**

(57) This application provides a method and an apparatus for predicting a travelable lane, and relates to fields such as artificial intelligence and autonomous driving. The method includes: obtaining forward lane line information of a host vehicle and backward lane line information of the host vehicle; constructing a first lane model based on the forward lane line information of the host vehicle; constructing a second lane model based on the backward lane line information of the host vehicle; and predicting a first travelable lane based on the first lane model and the second lane model. In the solutions of this application, accuracy and reliability of lane prediction in a traffic congestion scenario can be improved.

400

| S410: Obtain forward lane line information of a host vehicle and backward lane line information of the host vehicle |
| --- |
| S420: Construct a first lane model based on the forward lane line information of the host vehicle |
| S430: Construct a second lane model based on the backward lane line information of the host vehicle |
| S440: Predict a first travelable lane based on the first lane model and the second lane model |

FIG. 4

EP 4 425 462 A1

**Description**

**TECHNICAL FIELD**

This application relates to the field of artificial intelligence, and more specifically, to a method and an apparatus for predicting a travelable lane.

**BACKGROUND**

Artificial intelligence (artificial intelligence, AI) is a theory, a method, a technology, or an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science, and attempts to understand essence of intelligence and produce a new intelligent machine that can react in a similar manner to human intelligence. Artificial intelligence is to research design principles and implementation methods of various intelligent machines, so that the machines have perception, inference, and decision-making functions. Research in the field of artificial intelligence includes robotics, natural language processing, computer vision, decision-making and inference, human-machine interaction, recommendation and search, AI basic theories, and the like. Autonomous driving is a mainstream application in the field of artificial intelligence. The autonomous driving technology relies on collaboration of computer vision, a radar, a monitoring apparatus, a global positioning system, and the like, to implement autonomous driving of a motor vehicle without human intervention.

Prediction of a travelable lane is of great significance to lane maintenance of a vehicle, especially an autonomous vehicle, in a traffic congestion scenario. Accurate lane prediction can ensure that under a condition of high longitudinal dynamics (cutting-in/cutting-out of a vehicle ahead), a host vehicle does not collide with a surrounding vehicle due to following the vehicle ahead.

Therefore, how to improve accuracy and reliability of lane prediction in a traffic congestion scenario is an urgent technical problem to be resolved.

**SUMMARY**

This application provides a method and an apparatus for predicting a travelable lane, to improve accuracy and reliability of lane prediction in a traffic congestion scenario.

According to a first aspect, a method for predicting a travelable lane is provided. The method includes: obtaining forward lane line information of a host vehicle and backward lane line information of the host vehicle; constructing a first lane model based on the forward lane line information of the host vehicle; constructing a second lane model based on the backward lane line information of the host vehicle; and predicting a first travelable lane based on the first lane model and the second lane model.

Optionally, the lane line information (namely, feature information of the lane line) includes at least one of a length, a position, an angle, curvature, a color, a width, a parallelism, a type, a confidence level, and the like.

Currently, predicting the travelable lane is usually implemented based on a lane line detected by a forward sensor. However, in a traffic congestion scenario, the forward lane line may be partially or completely blocked. As a result, accuracy and reliability of predicting the travelable lane are greatly reduced.

In this embodiment of this application, the travelable lane is predicted by merging the forward lane line information of the host vehicle and the backward lane line information of the host vehicle. Specifically, the travelable lane is predicted by merging the first lane model constructed based on the forward lane line information of the host vehicle and the second lane model constructed based on the backward lane line information of the host vehicle. In this way, accuracy and reliability of predicting the travelable lane in the traffic congestion scenario can be improved.

With reference to the first aspect, in some implementations of the first aspect, the forward lane line of the host vehicle may be detected by using a lidar.

It should be understood that the lane line may be usually detected by using a sensor such as a camera or a lidar. However, for the camera, a reliable lane line cannot be detected when the lane line is blocked by a vehicle, rain or snow, or another obstacle, or when lane line markings are not obvious, incomplete, and the like, or when the vehicle travels in an environment such as a low-illumination environment, a strong-light environment, or another rain or snow environment. For an advanced driver-assistance system or an autonomous driving system, reliable and stable travelable lanes are very important. Therefore, the foregoing problem can be effectively resolved by using more accurate 3D information of a road border and an obstacle provided by the lidar, including coordinates, depth information, and the like.

Therefore, in this embodiment of this application, the forward lane line may be detected by using the lidar, so that accuracy and reliability of predicting the travelable lane can be improved.

It should be understood that, in a preferred solution, the forward lane line may be detected by using the lidar. However, it should be understood that in an actual operation, the forward lane line may alternatively be detected by using the camera or another sensor. This is not limited.

Similarly, the backward lane line may also be detected by using the lidar, the camera, or another sensor. This is not limited.

With reference to the first aspect, in some implementations of the first aspect, the predicting a first travelable lane based on the first lane model and the second lane model includes: associating lane lines in the first lane model and the second lane model with lane line sequence numbers; determining whether lane lines associated with a same lane line sequence number in the first lane model and the second lane model are matched; supplementing matched lane lines in the first lane model and the second lane model; and predicting the first travelable lane based on supplemented lane lines.

Optionally, the lane line sequence numbers may include at least one of a left lane line ($H_{left}$) and a right lane line ($H_{right}$) of a host vehicle lane (H), a left lane line ($L1_{left}$) and a right lane line ($L1_{right}$) of a first left lane (L1), a left lane line ($L2_{left}$) and a right lane line ($L2_{right}$) of a second left lane (L2), a left lane line ($R1_{left}$) and a right lane line ($R1_{right}$) of a first right lane (R1), a left lane line ($R2_{left}$) and a right lane line ($R2_{right}$) of a second right lane (R2), and the like.

Optionally, the determining whether lane lines associated with a same lane line sequence number in the first lane model and the second lane model are matched may include: determining, based on feature information of the lane lines in the first lane model and the second lane model, whether the lane lines associated with the same lane line sequence number in the first lane model and the second lane model are matched.

In this embodiment of this application, the lane lines in the first lane model and the second lane model are associated with the lane line sequence numbers. Next, it is determined whether the lane lines associated with the same lane line sequence number in the first lane model and the second lane model are matched. Then, the matched lane lines in the first lane model and the second lane model are supplemented. Finally, the first travelable lane is predicted based on the supplemented lane lines. In this way, accuracy and reliability of predicting the travelable lane can be improved.

With reference to the first aspect, in some implementations of the first aspect, the method further includes: obtaining a border of a freespace in a target direction of the host vehicle, where the target direction includes a forward direction and/or a backward direction, and the border of the freespace is determined based on at least one of a road border, a dynamic obstacle border, and a static obstacle border; predicting a second travelable lane based on the border of the freespace in the target direction of the host vehicle; and correcting the first travelable lane based on the second travelable lane.

In this embodiment of this application, the border of the freespace in the target direction of the host vehicle may further be obtained, the second travelable lane is predicted based on the border of the freespace in the target direction of the host vehicle, and the first travelable lane predicted based on the lane line is corrected based on the second travelable lane. In this way, accuracy and reliability of predicting the travelable lane can be further improved.

With reference to the first aspect, in some implementations of the first aspect, the predicting a second travelable lane based on the border of the freespace in the target direction of the host vehicle includes: constructing a border model based on feature information of the border of the freespace in the target direction of the host vehicle, where the feature information includes at least one of a border position, an angle, a type, and a confidence level; and predicting the second travelable lane based on the border model, a position of the host vehicle (or a trajectory of the host vehicle), and a preset lane width.

With reference to the first aspect, in some implementations of the first aspect, the method further includes: obtaining a traveling trajectory of a vehicle in the target direction of the host vehicle, where the target direction includes the forward direction and/or the backward direction; predicting a third travelable lane based on the traveling trajectory of the vehicle in the target direction of the host vehicle; and correcting the first travelable lane based on the third travelable lane.

In this embodiment of this application, the traveling trajectory of the vehicle in the target direction of the host vehicle may further be obtained, and then the first travelable lane predicted based on the lane line is corrected based on the third travelable lane. In this way, accuracy and reliability of predicting the travelable lane can be further improved. In addition, in a complex urban road environment, continuity of predicting the travelable lane can be further ensured. For example, when the lane line cannot be detected or cannot be detected clearly, the travelable lane may also be predicted based on the traveling trajectory of the vehicle in the target direction of the host vehicle.

With reference to the first aspect, in some implementations of the first aspect, the predicting a third travelable lane based on the traveling trajectory of the vehicle in the target direction of the host vehicle includes: constructing a trajectory model based on the traveling trajectory of the vehicle in the target direction of the host vehicle; and predicting the third travelable lane based on the trajectory model and a preset lateral deviation.

Optionally, the predicting a third travelable lane based on the traveling trajectory of the vehicle in the target direction of the host vehicle may further include: constructing a historical trajectory model and a predicted trajectory model based on the traveling trajectory of the vehicle in the target direction of the host vehicle; and predicting the third travelable lane based on the historical trajectory model, the predicted trajectory model, a motion trajectory model of the host vehicle, and a preset lateral deviation.

With reference to the first aspect, in some implementations of the first aspect, the method further includes: calculating first curvature of the first travelable lane based on the first travelable lane and a heading angle of the host vehicle; and correcting the first travelable lane based on the first curvature.

It should be understood that in a low-speed congestion scenario, because a detection range for the lane line is limited, it is difficult to provide an accurate road curvature parameter. Therefore, in this embodiment of this application, the first curvature of the first travelable lane is calculated based on the predicted first travelable lane and the predicted heading angle of the host vehicle, so that real-time performance and accuracy of calculating the road curvature can be improved. In addition, the first travelable lane is corrected based on the first curvature, so that accuracy and reliability of predicting the travelable lane can be further improved.

With reference to the first aspect, in some implementations of the first aspect, the calculating first curvature of the first travelable lane based on the first travelable lane and a heading angle of the host vehicle includes: calculating a lateral distance from the host vehicle to a lane line based on the first travelable lane; and calculating the first curvature of the first travelable lane by using the heading angle of the host vehicle and the lateral distance as input variables and using a vehicle dynamics model and a correlation between road curvature and a steering wheel angle.

In this embodiment of this application, the lateral distance from the host vehicle to the lane line may be calculated based on the first travelable lane, and the first curvature of the first travelable lane is calculated by using the heading angle of the host vehicle and the lateral distance as input variables and using the vehicle dynamics model and the correlation between the road curvature and the steering wheel angle, so that real-time performance and accuracy of calculating the road curvature can be improved.

With reference to the first aspect, in some implementations of the first aspect, the heading angle of the host vehicle is obtained by using a global positioning system GPS.

With reference to the first aspect, in some implementations of the first aspect, the method further includes: determining second curvature of the first travelable lane based on a navigation map and a GPS; and correcting the first travelable lane based on the second curvature.

It should be understood that in a low-speed congestion scenario, because a detection range for the lane line is limited, it is difficult to provide an accurate road curvature parameter. In this embodiment of this application, the second curvature of the first travelable lane may be determined based on the navigation map and the global positioning system GPS, so that real-time performance and accuracy of calculating the road curvature can be improved. In addition, the first travelable lane is corrected based on the second curvature, so that accuracy and reliability of predicting the travelable lane can be further improved.

With reference to the first aspect, in some implementations of the first aspect, the method further includes: performing path planning based on the first travelable lane.

It should be understood that the performing path planning based on the first travelable lane may be understood as using the first travelable lane as a lateral reference trajectory for lane keeping, namely, a lateral constraint condition. In this way, lane keeping performance in a vehicle traveling process can be improved while improving security and reliability of path planning. It may also be understood that the first travelable lane is used as a constraint condition for lane allocation. To be specific, other vehicles traveling near the host vehicle is allocated to their respective lanes based on the first travelable lane, and lateral and longitudinal trajectories of the host vehicle are planned with reference to a traffic rule. In this way, lane keeping performance in a vehicle traveling process can be improved while improving security and reliability of path planning.

With reference to the first aspect, in some implementations of the first aspect, the method further includes: performing path planning based on the first travelable lane and the freespace.

It should be understood that the performing path planning based on the first travelable lane and the freespace may be understood as using the first travelable lane and the freespace as constraint conditions for lateral path planning. In this way, lane keeping performance in a vehicle traveling process can be improved while improving security and reliability of path planning.

With reference to the first aspect, in some implementations of the first aspect, the method further includes: predicting, based on a historical traveling trajectory of the vehicle in the target direction of the host vehicle, a traveling trajectory of the vehicle in the target direction of the host vehicle in a future target time period, where the target direction includes the forward direction and/or the backward direction; and performing path planning based on the first travelable lane and the traveling trajectory of the vehicle in the target direction of the host vehicle in the future target time period.

In this embodiment of this application, path planning may be performed based on the predicted first travelable lane and the traveling trajectory of the vehicle in the target direction of the host vehicle in the future target time period. To be specific, the first travelable lane and the traveling trajectory of the vehicle in the target direction of the host vehicle in the future target time period are used as constraint conditions for lateral path planning. In this way, lane keeping performance in a vehicle traveling process can be improved while improving security and reliability of path planning.

Optionally, a contour of an obstacle may be further used as a constraint condition for lateral path planning. This is not limited in this application.

According to a second aspect, an apparatus for predicting a travelable lane is provided, including an obtaining module and a processing module. The obtaining module is configured to obtain forward lane line information of a host vehicle and backward lane line information of the host vehicle. The processing module is configured to: construct a first lane model based on the forward lane line information of the host vehicle; construct a second lane model based on the backward lane line information of the host vehicle; and predict a first travelable lane based on the first lane model and the second lane model.

With reference to the second aspect, in some implementations of the second aspect, the forward lane line of the host vehicle is detected by using a lidar.

With reference to the second aspect, in some implementations of the second aspect, the processing module is further configured to: associate lane lines in the first lane model and the second lane model with lane line sequence numbers; determine whether lane lines associated with a same lane line sequence number in the first lane model and the second lane model are matched; supplement matched lane lines in the first lane model and the second lane model; and predict the first travelable lane based on supplemented lane lines.

With reference to the second aspect, in some implementations of the second aspect, the obtaining module is further configured to obtain a border of a freespace in a target direction of the host vehicle, where the target direction includes a forward direction and/or a backward direction, and the border of the freespace is determined based on at least one of a road border, a dynamic obstacle border, and a static obstacle border. The processing module is further configured to: predict a second travelable lane based on the border of the freespace in the target direction of the host vehicle; or correct the first travelable lane based on the second travelable lane.

With reference to the second aspect, in some implementations of the second aspect, the processing module is further configured to: construct a border model based on feature information of the border of the freespace in the target direction of the host vehicle, where the feature information includes at least one of a border position, an angle, a type, and a confidence level; and predict the second travelable lane based on the border model, a position of the host vehicle, and a preset lane width.

With reference to the second aspect, in some implementations of the second aspect, the obtaining module is further configured to obtain a traveling trajectory of a vehicle in the target direction of the host vehicle, where the target direction includes the forward direction and/or the backward direction. The processing module is further configured to: predict a third travelable lane based on the traveling trajectory of the vehicle in the target direction of the host vehicle; and correct the first travelable lane based on the third travelable lane.

With reference to the second aspect, in some implementations of the second aspect, the processing module is further configured to: construct a trajectory model based on the traveling trajectory of the vehicle in the target direction of the host vehicle; and predict the third travelable lane based on the trajectory model and a preset lateral deviation.

With reference to the second aspect, in some implementations of the second aspect, the processing module is further configured to: calculate first curvature of the first travelable lane based on the first travelable lane and a heading angle of the host vehicle; and correct the first travelable lane based on the first curvature.

With reference to the second aspect, in some implementations of the second aspect, the processing module is further configured to: calculate a lateral distance from the host vehicle to a lane line based on the first travelable lane; and calculate the first curvature of the first travelable lane by using the heading angle of the host vehicle and the lateral distance as input variables and using a vehicle dynamics model and a correlation between road curvature and a steering wheel angle.

With reference to the second aspect, in some implementations of the second aspect, the heading angle of the host vehicle is obtained by using a global positioning system GPS.

With reference to the second aspect, in some implementations of the second aspect, the processing module is further configured to: determine second curvature of the first travelable lane based on a navigation map and a global positioning system GPS; and correct the first travelable lane based on the second curvature.

With reference to the second aspect, in some implementations of the second aspect, the processing module is further configured to: predict, based on a historical traveling trajectory of the vehicle in the target direction of the host vehicle, a traveling trajectory of the vehicle in the target direction of the host vehicle in a future target time period, where the target direction includes the forward direction and/or the backward direction; and perform path planning based on the first travelable lane and the traveling trajectory of the vehicle in the target direction of the host vehicle in the future target time period.

According to a third aspect, an apparatus for predicting a travelable lane is provided, including an input/output interface, a processor, and a memory. The processor is configured to control the input/output interface to send and receive a signal or information. The memory is configured to store a computer program, and the processor is configured to invoke the computer program from the memory and run the computer program, so that the apparatus for predicting the travelable lane performs the method for predicting a travelable lane according to any one of the first aspect or the possible implementations of the first aspect.

According to a fourth aspect, a vehicle is provided, including the apparatus for predicting the travelable lane according to any one of the second aspect or the possible implementations of the second aspect.

According to a fifth aspect, a computing device is provided, including at least one processor and a memory. The at least one processor is coupled to the memory and is configured to read and execute instructions in the memory, to perform the method for predicting a travelable lane according to any one of the first aspect or the possible implementations of the first aspect.

According to a sixth aspect, a computer program product including instructions is provided. When the computer program product runs on a computer, the computer is enabled to perform the method for predicting a travelable lane according to any one of the first aspect or the possible implementations of the first aspect.

According to a seventh aspect, a computer-readable medium is provided. The computer-readable medium stores program code. When the program code is run on a computer, the computer is enabled to perform the method for predicting a travelable lane according to any one of the first aspect or the possible implementations of the first aspect.

According to an eighth aspect, a chip is provided. The chip includes a processor and a data interface. The processor reads, through the data interface, instructions stored in a memory, to perform the method for predicting a travelable lane in any one of the first aspect or the possible implementations of the first aspect.

Optionally, as an implementation, the chip may further include a memory. The memory stores instructions. The processor is configured to execute the instructions stored in the memory. When the instructions are executed, the processor is configured to perform the method for predicting a travelable lane according to any one of the first aspect or the possible implementations of the first aspect.

According to a ninth aspect, a chip system is provided. The chip system includes at least one processor, configured to support implementation of functions in the first aspect or some implementations of the first aspect, for example, receiving or processing data and/or information in the foregoing method.

In a possible design, the chip system further includes a memory. The memory is configured to store program instructions and data. The memory is located inside or outside the processor. The chip system may include a chip, or may include a chip and another discrete component.

## BRIEF DESCRIPTION OF DRAWINGS

FIG. 1 is an example diagram of an application scenario according to an embodiment of this application;

FIG. 2 is a schematic functional block diagram of a vehicle according to an embodiment of this application;

FIG. 3 is an example diagram of a system architecture according to an embodiment of this application;

FIG. 4 is an example diagram of a method for predicting a travelable lane according to an embodiment of this application;

FIG. 5 is an example diagram of a method for merging forward and backward lane models according to an embodiment of this application;

FIG. 6 is an example diagram of another method for merging forward and backward lane models according to an embodiment of this application;

FIG. 7 is an example diagram of a border of a freespace according to an embodiment of this application;

FIG. 8 is an example diagram of a method for predicting a second travelable lane according to an embodiment of this application;

FIG. 9 is an example diagram of border extraction according to an embodiment of this application;

FIG. 10 is an example diagram of traveling trajectories of vehicles in a forward direction and a backward direction of a host vehicle according to an embodiment of this application;

FIG. 11 is an example diagram of a method for predicting a third travelable lane according to an embodiment of this application;

FIG. 12 is an example diagram of contour borders and future traveling trajectories of moving vehicles in a target direction according to an embodiment of this application;

FIG. 13 is an example diagram of an apparatus for predicting a travelable lane according to an embodiment of this application; and

FIG. 14 is an example block diagram of a hardware structure of an apparatus according to an embodiment of this application.

## DESCRIPTION OF EMBODIMENTS

The following first describes an example of an application scenario of the embodiments of this application.

The method and/or apparatus for predicting a travelable lane provided in the embodiments of this application may be applied to a transportation means such as a vehicle. The vehicle may be specifically an internal combustion locomotive, a smart electric vehicle, or a hybrid vehicle. Alternatively, the vehicle may be a vehicle of another power type. This is not limited in the embodiments of this application. In addition, these methods and/or apparatuses may be applied to human driving, assisted driving, and autonomous driving. The following describes several possible application scenarios.

Application scenario 1: Path planning/driving planning

The method and/or apparatus for predicting a travelable lane provided in the embodiments of this application may be applied to a scenario such as path planning/driving planning. For example, a predicted travelable lane may be sent to a path planning module or apparatus, so that the path planning module or apparatus can plan a path based on the predicted travelable lane, or adjust an existing path planning solution. For another example, the predicted travelable lane may be sent to a driving planning module or apparatus, so that the driving planning module or apparatus can determine a freespace of the vehicle based on the predicted travelable lane, or can further direct a subsequent vehicle behavior based on the predicted travelable lane. For example, an execution action in autonomous driving may be generated, or a driver may be directed to drive.

The freespace may also be referred to as a passable space, and is an expression manner of describing a surrounding environment of the vehicle. For example, a passable space of a vehicle generally includes information such as another vehicle, a pedestrian, and a roadside. Therefore, the passable space of the vehicle is mainly used to clearly describe a space that is near the vehicle and that can be freely passed through by the vehicle.

Application scenario 2: Navigation system

The method and/or apparatus for predicting a travelable lane provided in the embodiments of this application may further be applied to a navigation system. After obtaining a predicted travelable lane, the vehicle may report the travelable lane to a navigation control module or apparatus. Based on the received travelable lane and with reference to other information such as a road condition, the navigation control module or apparatus may direct a driver in the subsequent driving, and/or may direct an autonomous vehicle to generate a corresponding execution action. The navigation control module or apparatus may be a data processing device such as a cloud device, a server, or a terminal device. The navigation control module may further be a vehicle-mounted module or apparatus disposed in the vehicle.

For further description, for example, the predicted travelable lane and traffic information (for example, traffic light information) may be combined to direct the vehicle to drive according to a traffic rule. Especially when the method and/or apparatus for predicting a travelable lane is applied to autonomous driving, the autonomous vehicle can be controlled to drive to a correct lane based on the predicted travelable lane, and to pass through a traffic light intersection at a correct time.

For another example, lane-level navigation information may be planned for the vehicle with reference to the predicted travelable lane, road condition information, path information, and the like.

Application scenario 3: Warning policy planning

The method and/or apparatus for predicting a travelable lane provided in the embodiments of this application may be further configured to perform warning policy planning. For example, lane departure warning may be performed based on a predicted travelable lane and a current position of the vehicle, and an alarm signal is sent when it is determined, based on the predicted travelable lane and the current position of the vehicle, that the vehicle deviates from the lane. For further description, for example, when the vehicle travels close to or on a solid lane line, warning is performed in a form of, for example, a trigger indicator or a sound. An alarm signal may also be sent to another decision-making or control module to further control vehicle driving.

For another example, collision warning may be performed based on the predicted travelable lane and a vehicle surrounding condition, and a collision warning policy may be planned based on the predicted travelable lane and information of the vehicle, such as another vehicle, a pedestrian, an obstacle, a curb, a building, and an isolation belt.

The following describes the technical solution in the embodiments of this application with reference to the accompanying drawings.

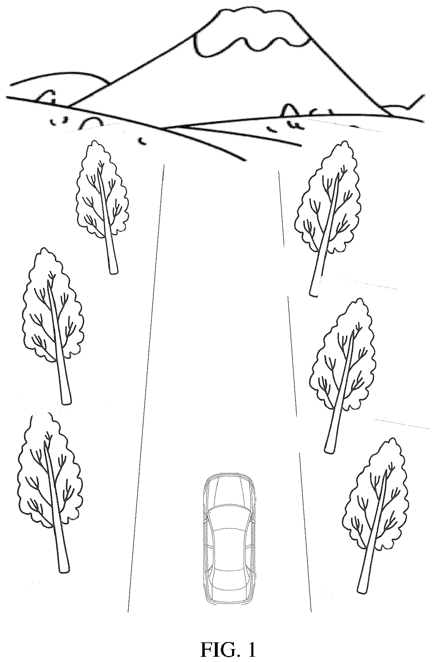

FIG. 1 is an example diagram of an application scenario according to an embodiment of this application. As shown in FIG. 1, in a traveling process of a vehicle, a vehicle driving system may detect surrounding information of the vehicle (including information such as a detected lane line, a border of a freespace, and a traveling trajectory of another vehicle), and then predict a travelable lane based on the detected surrounding information of the vehicle, so that a warning can be given based on the predicted travelable lane before the vehicle deviates from a host lane or is about to deviate from the host lane, and a position of the vehicle can be adjusted in a timely manner, so as to ensure driving safety and effectively reduce or avoid traffic accidents.

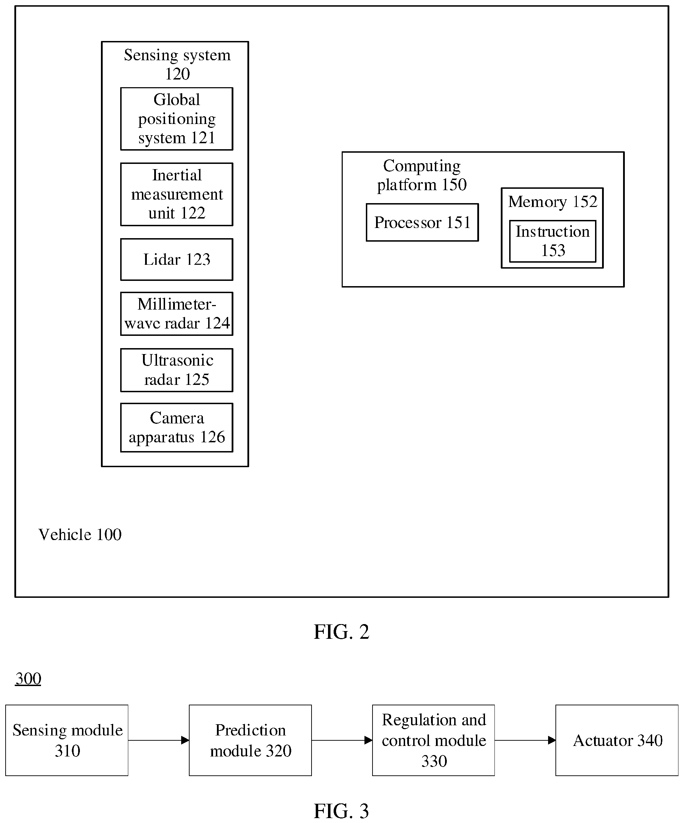

FIG. 2 is a schematic functional block diagram of a vehicle 100 according to an embodiment of this application.

The vehicle 100 may include a sensing system 120 and a computing platform 150. The sensing system 120 may include several types of sensors that sense information about an environment around the vehicle 100. For example, the sensing system 120 may include one or more of a global positioning system 121 (the global positioning system may be a GPS system, or may be a BeiDou system or another positioning system), an inertia measurement unit (inertial measurement unit, IMU) 122, a lidar 123, a millimeter-wave radar 124, an ultrasonic radar 125, and a camera apparatus 126.

Some or all functions of the vehicle 100 are controlled by the computing platform 150. The computing platform 150 may include at least one processor 151. The processor 151 may execute an instruction 153 stored in a non-transitory computer-readable medium such as memory 152. In some embodiments, the computing platform 150 may alternatively be a plurality of computing devices that control individual components or subsystems of the vehicle 100 in a distributed manner.

The processor 151 may be any conventional processor, for example, a central processing unit (central processing unit, CPU). Alternatively, the processor 151 may further include a digital signal processor (digital signal processor, DSP), a graphics processing unit (graphics processing unit, GPU), a field programmable gate array (field programmable gate array, FPGA), a system on chip (system on chip, SOC), an application-specific integrated circuit (application-specific integrated circuit, ASIC), or a combination thereof.

The vehicle 100 may include an advanced driver-assistance system (advanced driving assistant system, ADAS). The ADAS obtains information from around the vehicle by using a plurality of sensors (including but not limited to: a lidar, a millimeter-wave radar, a camera apparatus, an ultrasonic sensor, a global positioning system, and an inertia measurement unit) in the vehicle, and analyzes and processes the obtained information, to implement functions such as obstacle sensing, target recognition, vehicle positioning, path planning, and driver monitoring/warning, thereby improving safety, automation and comfort of vehicle driving.

FIG. 3 is an example diagram of a system architecture according to an embodiment of this application. As shown in FIG. 3, the system architecture 300 includes a sensing module 310 and a prediction module 320. The following briefly describes these modules.

The sensing module 310 (equivalent to the sensing system 120) may be configured to sense information about pavement and a surrounding environment when the vehicle is traveling. Optionally, the sensing module 310 may include one or more of a camera sensing module, a radar sensing module, a positioning module, a map module, and the like. The camera sensing module mainly uses a camera to capture an image, and obtains information such as a lane line, a traveling vehicle, a freespace, a traffic sign, and a pedestrian based on the captured image. The radar sensing module may be configured to detect information such as a pedestrian, a lane line, a vehicle, a curb, and a freespace. The positioning module may be configured to implement global localization of the vehicle. The map module may be configured to obtain a topology of a surrounding road.

The prediction module 320 is configured to: obtain the detected information from the sensing module 310, and predict a travelable lane based on the information. For a specific implementation of predicting the travelable lane, refer to the following method 400. It should be understood that the prediction module 320 may further be configured to predict a behavior of a dynamic target (including a vehicle, a pedestrian, and the like). This is not limited in this application.

Optionally, the system architecture 300 may further include a regulation and control module 330. The regulation and control module 330 is configured to generate a control instruction of the vehicle based on the travelable lane output by the prediction module 320, and output the control instruction to a corresponding actuator through an output interface of the regulation and control module 330. Optionally, when generating the control instruction of the vehicle based on the travelable lane output by the prediction module 320, the regulation and control module 330 may further make reference to a relative position relationship between a host vehicle and a surrounding dynamic target and the lane, and one or more of information such as status information, historical motion trajectories, and predicted target trajectories of the host vehicle and the surrounding dynamic target. This is not limited in this application.

Optionally, the system architecture 300 may further include an actuator 340. The actuator 340 is configured to execute the control instruction generated by the regulation and control module 330. The actuator 340 may include an accelerator, a brake, a steering wheel, and the like.

It should be further noted that the system architecture 300 shown in FIG. 3 is merely an example rather than a limitation. A person of ordinary skill in the art may understand that the system architecture 300 may include more or fewer modules. This is not limited in this embodiment of this application.

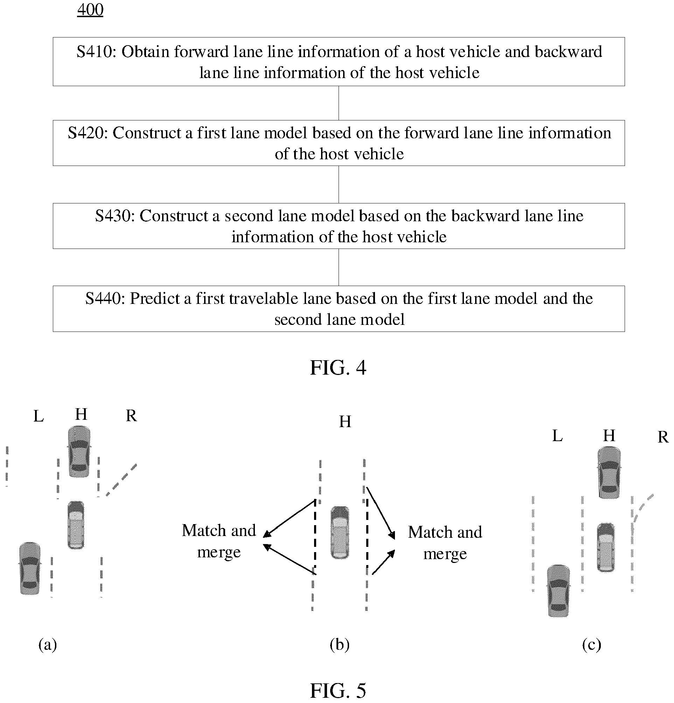

FIG. 4 is an example diagram of a method for predicting a travelable lane according to an embodiment of this application. The method 400 shown in FIG. 4 may include S410 to S440. It should be understood that a sequence of the foregoing steps is not limited in this embodiment of this application. Any solution that can be implemented in any sequence of the foregoing steps in this application falls within the protection scope of this application. These steps are separately described in detail below.

S410: Obtain forward lane line information of a host vehicle and backward lane line information of the host vehicle.

Optionally, before the forward lane line information and the backward lane line information of the host vehicle are obtained, the forward lane line and the backward lane line may be first detected by using a sensor, and then the lane line information is obtained based on the detected lane line.

It should be understood that the lane line information may alternatively be referred to as feature information of the lane line. This is not distinguished in this application.

Optionally, the forward lane line may be detected by using a sensor such as a camera or a lidar. Similarly, optionally, the backward lane line may also be detected by using the lidar, the camera, or another sensor. This is not limited in this application.

It should be understood that a sensor used in forward lane line detection may be the same as or different from a sensor used in backward lane line detection. This is not limited in this application.

It should be understood that, for the camera, a reliable lane line cannot be detected when the lane line is blocked by a vehicle, rain or snow, or another obstacle, or when lane line markings are not obvious, incomplete, and the like, or when the vehicle travels in an environment such as a low-illumination environment, a strong-light environment, or another rain or snow environment. Corresponding to the camera, the lidar is a sensor component that uses an active light source. Using this feature, the lidar can detect reliable lane lines in some scenarios such as unclear lane lines and low illumination. In addition, the lidar has a powerful capability to detect a contour of a target. In this way, a stronger prediction capability for a travelable lane can be provided.

Therefore, to improve reliability of lane line detection, as a preferred solution, in a traffic congestion scenario, a forward lidar may be configured to detect a forward lane line, and a lidar or a backward camera may be configured to detect a backward lane line. However, it should be understood that this may not be limited thereto in an actual operation.

S420: Construct a first lane model based on the forward lane line information of the host vehicle. The step includes obtaining a type (for example, a solid line, a dashed line, white, or yellow) of the forward lane line of the host vehicle, and establishing a related lane-line description model, a lane line sequence number, and the like.

Optionally, the forward lane line information of the host vehicle includes at least one of a length, a position, an angle, curvature, a color, a width, a parallelism, a type, a confidence level, and the like.

S430: Construct a second lane model based on the backward lane line information of the host vehicle. The step includes obtaining a type (for example, a solid line, a dashed line, white, or yellow) of the backward lane line of the host vehicle, and establishing a related lane-line description model, a lane line sequence number, and the like.

Optionally, the backward lane line information of the host vehicle includes at least one of a length, a position, an angle, curvature, a color, a width, a parallelism, a type, a confidence level, and the like.

It should be understood that the lane model includes a lane line model. Optionally, each lane line in the lane line model may be in a form of a linear polynomial, a Taylor expansion of a helix, a parabola, or the like. This is not limited in this application. Optionally, each lane line may be a straight line or a curve. This is not limited in this application. For example, a form of each lane line in the lane line model may be one of the following formulas (1) to (3):

$$y = c_0 + c_1 x + c_2 x^2 + c_3 x^3 \qquad (1)$$

$$y = c_0 + c_1 x + c_2 x^2 \qquad (2)$$

$$y = c_0 + c_1 x \qquad (3)$$

In this application, the first lane model and the second lane model need to be separately constructed based on the detected forward lane line and backward lane line, to convert the obtained lane lines into a modeled or digital form, so as to be subsequently applied to a prediction algorithm.

S440: Predict a first travelable lane based on the first lane model and the second lane model.

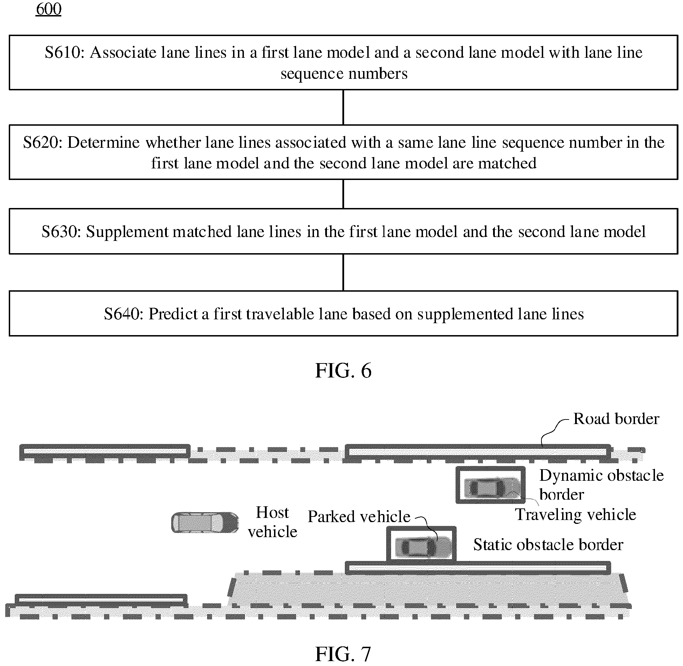

It should be understood that predicting the first travelable lane based on the first lane model and the second lane model is a process of merging the forward and backward lane models to obtain the first travelable lane. With reference to FIG. 5 and FIG. 6, the following describes a process of merging the forward and backward lane models to obtain the first travelable lane.

FIG. 5 is an example diagram of a method for merging forward and backward lane models according to an embodiment of this application. (a) in FIG. 5 is an example diagram of a constructed lane line model; (b) in FIG. 5 is an example diagram of matching and merging lane lines; and (c) in FIG. 5 is an example diagram of a travelable lane obtained by merging. FIG. 6 is an example diagram of another method for merging forward and backward lane models according to an embodiment of this application. As shown in FIG. 6, the method 600 includes steps S610 to S640. The following separately describes the steps in detail with reference to FIG. 5 and FIG. 6.

S610: Associate lane lines in the first lane model and the second lane model with lane line sequence numbers.

Optionally, the lane line sequence numbers may include at least one of a left lane line ($H_{left}$) and a right lane line ($H_{right}$) of a host vehicle lane (H), a left lane line ($L1_{left}$) and a right lane line ($L1_{right}$) of a first left lane (L1), a left lane line ($L2_{left}$) and a right lane line ($L2_{right}$) of a second left lane (L2), a left lane line ($R1_{left}$) and a right lane line ($R1_{right}$) of a first right lane (R1), a left lane line ($R2_{left}$) and a right lane line ($R2_{right}$) of a second right lane (R2), and the like. It should be understood that the foregoing lane line sequence numbers are merely an example. In an actual operation, the lane line sequence numbers may also be represented in another manner. This is not limited in this application.

In an actual operation, the lane lines may be associated with the lane line sequence numbers based on status feature information such as a type (a solid line, a dashed line, a color, and the like), a position, an angle, curvature, and a length range of the lane lines in currently detected lane models (namely, the first lane model and the second lane model). Specifically, the lane lines in the first lane model may be associated with the lane line sequence numbers based on status feature information such as a type, a position, an angle, curvature, and a length range of the lane lines in the first lane model; and the lane lines in the second lane model may be associated with the lane line sequence numbers based on status feature information such as a type, a position, an angle, curvature, and a length range of the lane lines in the second lane model.

Because a current measured value of the lane line may be unreliable or has noise, a current travelable lane model needs to be predicted. Three concepts are introduced in the prediction of the lane model: an observed lane line, an estimated lane line, and a merged lane line. According to the Kalman filtering principle, a current status (unknown real status, not an observed value) is predicted. A current status value needs to be estimated based on changes of a historical status. In addition, because a status changes with time, a current observed value and a current predicted status need to be introduced to update a future predicted lane model. In this way, during lane merging, a current lane model is predicted by using a historical observed lane line model and a historical predicted lane line model through iteration, and a future lane model is predicted by using historical and current observed lane line models and historical and current predicted lane line models through iteration.

Specifically, when the lane lines are associated with the lane line sequence numbers, the following conditions need to be met: For a length direction, overlapping degrees between observed values of the lane lines and a current predicted lane line need to be greater than a first preset threshold; for a lane line model parameter (a position, an angle, curvature, and the like), parameter differences between the lane lines and a current predicted lane line are less than a second preset threshold; for a covariance (a position, an angle, curvature, and the like) of a lane line parameter, overlapping degrees of probability coverage between the lane lines and a current predicted lane line are greater than a third preset threshold; and for a lateral direction, statistical indicators of distances between the lane lines and a current predicted lane line are less than a fourth preset threshold. It should be understood that in an actual operation, the foregoing preset thresholds may be adaptively adjusted along with information such as lane curvature and a length, and this is not limited. It should be understood that the current predicted lane line is a lane line corresponding to a current travelable lane model predicted in a previous shot, and the model may be corrected with reference to information such as a position of the host vehicle, a positioning system, and a preset lane width.

If a currently detected lane line is not associated with all lane lines in a currently estimated lane model, it is determined that the lane line may be a newly detected lane line or has a turnout structure. When the lane line is continuously detected, it is determined that the lane line is a newly detected lane line or has a turnout structure.

S620: Determine whether lane lines associated with a same lane line sequence number in the first lane model and the second lane model are matched. For a specific matching manner, refer to description of step S630.

S630: Supplement matched lane lines in the first lane model and the second lane model.

In an actual operation, it may be determined, based on status feature information such as a type, a position, an angle, curvature, and a length range of the lane lines in the lane models, whether forward and backward lane lines associated with a same lane line sequence number in the first lane model and the second lane model are matched.

Specifically, it may be first determined whether there are forward and backward lane lines associated with a same lane line sequence number. If only a forward lane line or backward lane line corresponds to the same lane line sequence number, it indicates that there are no forward and backward lane lines associated with the same lane line sequence number, and an existing lane line may be directly used as a lane line corresponding to the lane line sequence number.

If there are forward and backward lane lines associated with the same lane line sequence number, it is determined whether slope parallelisms of the forward and backward lane lines at endpoints are relatively consistent. If the slope parallelisms of the forward and backward lane lines at the endpoints are quite different, the forward and backward lane lines are supplemented based on a heading angle of the host vehicle or a contour line of the host vehicle that is used as a reference.

If the slope parallelisms of the forward and backward lane lines at the endpoints are relatively consistent, an extrapolated lane line continues to be used, to extend one of the forward and backward lane lines to overlap the other lane line. In this way, a lateral distance between the two lane lines is less than a preset threshold.

S640: Predict the first travelable lane based on supplemented lane lines.

Supplemented lane lines corresponding to the lane line sequence numbers are merged to obtain a predicted lane line, and then the first travelable lane is obtained based on the predicted lane line.

Herein, a parameter of the lane model for the first travelable lane may further be calculated by using the detected forward and backward lane lines, the heading angle of the host vehicle, and a parameter of the predicted lane line.

The detected forward and backward lane line models, the supplemented lane line models, the lane line sequence numbers associated with the forward and backward lane lines, and left and right lane line models estimated in a previous shot and corresponding to the lane line sequence numbers are used as input parameters, to obtain the first travelable lane by merging. A merging method is as follows:

(1) A predicted lane line is obtained by using a filtering algorithm and using model parameters (measured values of a length, a position, an angle, and curvature, and covariances of the length, the position, the angle, and the curvature) of the foregoing lane lines as an input.
Alternatively, a plurality of points (x0, y0), (x1, y1), and (x2, y2) in spatial coordinates are used as an input, and a filtering algorithm is used to obtain the predicted lane line.
(2) Based on determining of consistency between a parameter and a threshold, some of the foregoing lane detection model parameters are selected, and parameters of the merged lane are updated.

Finally, it is determined whether the following conditions are met, and a confidence level of the predicted travelable lane is determined:

(1) whether the predicted left and right lane line models corresponding to the lane line sequence numbers meet a parallel condition; and
(2) the predicted travelable lane meets a specific width condition.

To ensure robustness of predicting the travelable lane, when there is a detected lane line associated with a host lane, prediction of the host vehicle lane is always updated. For a predicted travelable lane below a confidence probability threshold, a sensing system needs to output a warning sign to the system.

In this embodiment of this application, the lane lines in the first lane model and the second lane model are associated with the lane line sequence numbers. Next, it is determined whether the lane lines associated with the same lane line sequence number in the first lane model and the second lane model are matched. Then, the matched lane lines in the first lane model and the second lane model are supplemented. Finally, the first travelable lane is predicted based on the supplemented lane lines. In this way, accuracy and reliability of predicting the travelable lane can be improved.

Optionally, the method 400 may further include: obtaining a border of a freespace in a target direction of the host vehicle; predicting a second travelable lane based on the border of the freespace in the target direction of the host vehicle; and correcting the first travelable lane based on the second travelable lane.

The target direction includes a forward direction and/or a backward direction, and the border of the freespace is determined based on at least one of a road border, a dynamic obstacle border, and a static obstacle border. FIG. 7 is an example diagram of a border of a freespace according to an embodiment of this application.

Optionally, the predicting a second travelable lane based on the border of the freespace in the target direction of the host vehicle may include: constructing a border model based on feature information of the border of the freespace in the target direction of the host vehicle, where the feature information includes at least one of a border position, an angle, a type, and a confidence level; and predicting the second travelable lane based on the border model, a position of the host vehicle (or a trajectory of the host vehicle), and a preset lane width.

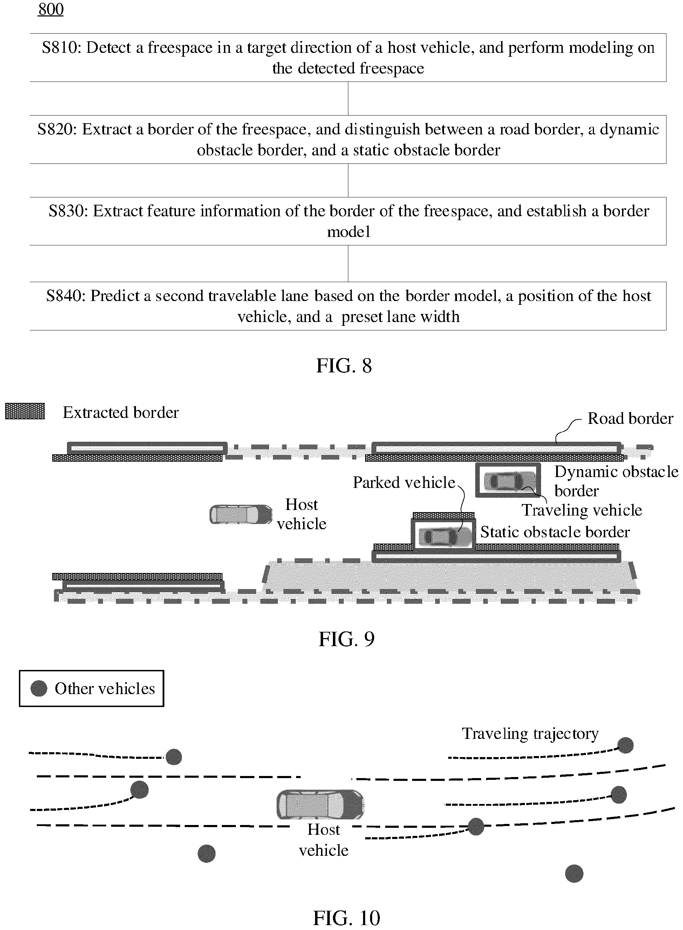

FIG. 8 is an example diagram of a method for predicting a second travelable lane according to an embodiment of this application. With reference to FIG. 8, the following describes in detail a method 800 for predicting a second travelable lane. As shown in FIG. 8, the method 800 includes steps S810 to S840.

S810: Detect a freespace in the target direction of the host vehicle, and perform modeling on the detected freespace.

Before the border of the freespace in the target direction is determined, the freespace in the target direction may be first detected by using a sensor such as the camera and the lidar. Then the road border, the dynamic obstacle border, and the static obstacle border are distinguished in the freespace. Finally, the border of the freespace is determined based on the road border, the dynamic obstacle border, and the static obstacle border.

Optionally, for the camera, modeling may be performed on the detected freespace in a manner such as semantic segmentation (semantic segmentation), conventional three-dimensional reconstruction (structure from motion, SFM), or an occupancy grid map (occupied grid map, OGM). For the lidar, modeling may be performed on the detected freespace in a manner such as the OGM or curb segmentation.

S820: Extract the border of the freespace, and distinguish between the road border, the dynamic obstacle border, and the static obstacle border.

Specifically, to extract the border of the freespace, the foregoing detected freespace needs to be used to obtain coordinates of the border of the freespace in a real world or in a vehicle system. Optionally, the road border, the dynamic obstacle border, and the static obstacle border may be distinguished by a classification method such as machine learning and deep learning and using a feature combination such as a color of the detected freespace, a radar (lidar) point cloud feature, and a target motion status.

S830: Extract feature information of the border of the freespace, and establish a border model.

Optionally, the border model of the freespace may be in a form of a vertex and connection line, a form of a polygon, a form of a multi-segment polynomial, a form of a border vertex information set, or the like. This is not limited in this application.

Optionally, the border model may be established by using the border of the freespace in the following manner.

First, coordinates of a key vertex can be extracted and a confidence level may be calculated. Specifically, for coordinate points representing the road border, the dynamic obstacle border, and the static obstacle border, classification and regression methods are used to obtain a plurality of border lines that can be fitted (which are relatively straight) by a lower-order equation. Intersection points of these border lines are border vertices of the freespace. These vertices are numbered, and distances from these vertices to straight lines with adjacent (1 to n) points as vertices are calculated separately. Compared with other vertices, the key vertex is far away from the straight lines.

The confidence level of the coordinates of the key vertex is obtained by using a confidence level of classification of the freespace, and a confidence level of classification of the road border, the dynamic obstacle border, and the static obstacle border.

Then, based on vertex coordinates of the road border, the dynamic obstacle border, and the static obstacle border, modeling is performed on the foregoing three borders in a form of a vertex and connection line, a form of a multi-segment polynomial, or a form of a border vertex information set.

Optionally:

(1) in the form of the multi-segment polynomial, one of a linear polynomial, a Taylor expansion of a helix, a parabola, and the like in the lane line model may be used, and the key vertex is used as a border point, to perform segment fitting on the road border, the dynamic obstacle border, and the static obstacle border;
(2) in the form of the vertex and connection line, the vertex is the key vertex, and the connection line is the multi-segment polynomial; and
(3) the border vertex information set is a set of key vertices.

S840: Predict the second travelable lane based on the border model, the position of the host vehicle (or a trajectory of the host vehicle), and the preset lane width.

Specifically, the road border and the static obstacle border are borders that need to be avoided by the host vehicle. Therefore, a border closest to a side of the host vehicle is extracted as a border of the travelable lane using distance relationships between the road border and the position of the host vehicle (or the trajectory of the host vehicle) and between the static obstacle border and the position of the host vehicle (or the trajectory of the host vehicle), as shown in FIG. 9.

A position of a dynamic obstacle is considered to be consistent with lane distribution. Specifically, if the target direction of the host vehicle is a forward direction, a forward border model is constructed based on a border of a freespace in a forward direction of the host vehicle, and the second travelable lane is predicted based on the forward border model, the position of the host vehicle, and the preset lane width. If the target direction of the host vehicle is a backward direction, a backward border model is constructed based on a border of a freespace in a backward direction of the host vehicle, and the second travelable lane is predicted based on the backward border model, the position of the host vehicle, and the preset lane width. If the target direction of the host vehicle is a forward direction and a backward direction, a forward border model and a backward border model are separately constructed based on borders of freespaces in the forward direction and the backward direction of the host vehicle. A forward lane model (namely, a forward travelable lane) and a backward lane model (namely, a backward travelable lane) are separately constructed based on forward and backward border models, the position of the host vehicle, and the preset lane width. Then, the forward lane model and the backward lane model are merged to obtain the second travelable lane. For a process of merging the forward lane model and the backward lane model, refer to description in the method 600.

Optionally, the correcting the first travelable lane based on the second travelable lane may be understood as obtaining a new travelable lane by merging the first travelable lane and the second travelable lane. The new travelable lane is a travelable lane obtained after the first travelable lane is corrected. Optionally, the new travelable lane may be a weighted sum result of the first travelable lane and the second travelable lane. Optionally, the new travelable lane may alternatively be determined based on respective confidence levels of the first travelable lane and the second travelable lane. This is not limited in this application. It should be further understood that in particular, if a lane line is blocked or there is no lane line, the second travelable lane may be directly used as the first travelable lane.

Optionally, in an actual operation, a lane model may be further constructed by using forward lane line information and a lane model may be constructed by using a border of a backward freespace, and then the obtained two forward and backward lane models are merged and predicted by using the method 600, to obtain the travelable lane. Alternatively, a lane model may be constructed by using a forward lane line and a lane model may be constructed by using a border of a forward freespace, and then the lane models obtained by using the two are merged and predicted in a manner of a weighted sum, a confidence level, or the like, to obtain the travelable lane. A combination manner is not limited in this application.

In this embodiment of this application, the border of the freespace in the target direction of the host vehicle may be obtained, the second travelable lane is predicted based on the border of the freespace in the target direction of the host vehicle, and the first travelable lane predicted based on the lane line is corrected based on the second travelable lane, so that the travelable lane can be predicted in a scenario of missing lane lines or no lane lines. In this way, accuracy and reliability of predicting the travelable lane can be further improved.

Optionally, the method 400 may further include: obtaining a traveling trajectory of a vehicle in the target direction of the host vehicle; predicting a third travelable lane based on the traveling trajectory of the vehicle in the target direction of the host vehicle; and correcting the first travelable lane based on the third travelable lane. The target direction includes the forward direction and/or the backward direction. As an example, FIG. 10 shows an example diagram of traveling trajectories of vehicles in a forward direction and a backward direction of a host vehicle.

Optionally, the predicting a third travelable lane based on the traveling trajectory of the vehicle in the target direction of the host vehicle may include: constructing a trajectory model (namely, a trajectory model of a vehicle in the target direction) based on the vehicle (namely, a moving vehicle) traveling trajectory in the target direction of the host vehicle; and predicting the third travelable lane based on the trajectory model and a preset lateral deviation.

Optionally, the trajectory model of the vehicle in the target direction may include at least one of a historical trajectory model and a predicted trajectory model.

Optionally, the predicting the third travelable lane based on the trajectory model and a preset lateral deviation may include: predicting the third travelable lane based on the trajectory model of the moving vehicle in the target direction, a motion trajectory model of the host vehicle, a preset lateral deviation, and the like.

Specifically, if the target direction of the host vehicle is a forward direction, the trajectory model is constructed based on the traveling trajectory of the vehicle in the forward direction of the host vehicle, and the third travelable lane is predicted based on the trajectory model of the moving vehicle, the motion trajectory model of the host vehicle, and the preset lateral deviation. If the target direction of the host vehicle is a backward direction, the trajectory model is constructed based on the traveling trajectory of the vehicle in the backward direction of the host vehicle, and the third travelable lane is predicted based on the trajectory model of the moving vehicle, the motion trajectory model of the host vehicle, and the preset lateral deviation. If the target direction of the host vehicle is a forward direction and a backward direction, trajectory models are separately constructed based on traveling trajectories of vehicles in the forward direction and the backward direction of the host vehicle. A forward lane model (namely, a forward travelable lane) and a backward lane model (namely, a backward travelable lane) are separately constructed based on trajectory models of moving vehicles in the forward and backward directions, the motion trajectory model of the host vehicle, and the preset lateral deviation. Then, the forward lane model and the backward lane model are merged to predict the third travelable lane. For a process of merging the forward lane model and the backward lane model, refer to description in the method 600.

Optionally, a future trajectory of a target such as a vehicle may further be predicted (and whether the target changes a lane is determined) with reference to information such as a traveling trajectory of the target such as the vehicle in the target direction, a contour of the target such as the vehicle, and a travelable lane predicted in a previous shot. The predicted lane line in the target direction may be updated based on determining of behaviors of a vehicle target, historical and predicted trajectories of the vehicle target, and the lane line model of the travelable lane predicted in the previous shot. Whether the updated predicted lane line is reliable is determined by using a lateral deviation relationship between the predicted lane line and the predicted trajectory of the vehicle target that travels along the lane (and the contour of the vehicle). Finally, the third travelable lane is predicted based on the predicted lane line.

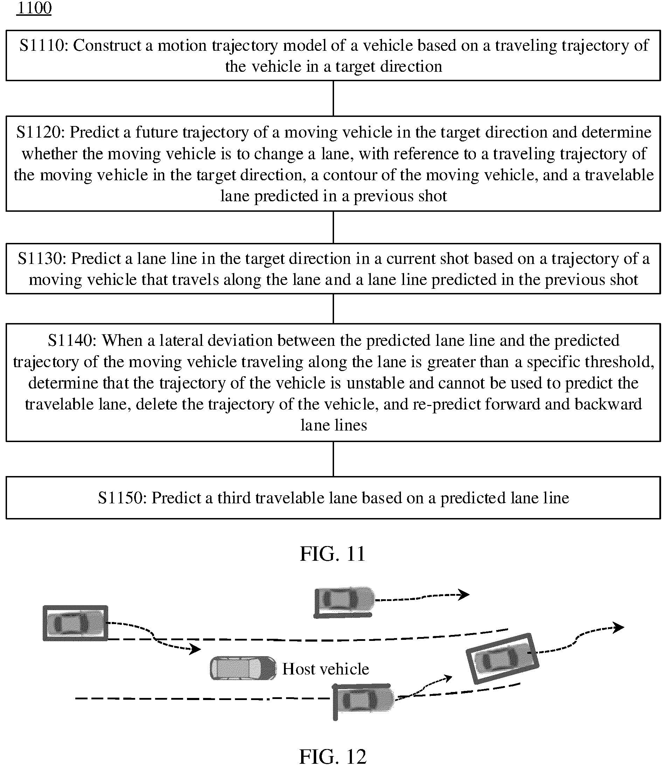

FIG. 11 is an example diagram of a method for predicting a third travelable lane according to an embodiment of this application. With reference to FIG. 11, the following describes in detail a method 1100 for predicting a third travelable lane. As shown in FIG. 11, the method 1100 includes steps S1110 to S1150.

S1110: Construct a motion trajectory model of the vehicle based on the traveling trajectory of the vehicle in the target direction.

It should be understood that the traveling trajectory may be understood as a historical traveling trajectory.

Optionally, a motion trajectory model of the vehicle may further be constructed based on a historical traveling trajectory of the vehicle in the target direction and a current status.

Specifically, a sensor in the target direction is used for detection and tracks a traveling vehicle. If the target direction of the host vehicle is a forward direction, a trajectory model is constructed based on the traveling trajectory of the vehicle in the forward direction of the host vehicle. If the target direction of the host vehicle is a backward direction, a trajectory model is constructed based on the traveling trajectory of the vehicle in the backward direction of the host vehicle. Status information such as a position, a speed, and an acceleration of a historical target trajectory, and current target status information are detected by using a sensor, to obtain a motion trajectory model of a vehicle target, which is used to describe a current motion status of the vehicle target.

Optionally, the traveling trajectory of the vehicle in the target direction may be detected by using a sensor such as a lidar, a millimeter-wave radar, and a camera. For example, the traveling trajectory of the vehicle in the forward direction may be detected by using a forward lidar, and the traveling trajectory of the vehicle in the backward direction may be obtained by using a backward camera. This is not limited.

S1120: Predict a future trajectory of a moving vehicle in the target direction and determine whether the moving vehicle is to change a lane, with reference to a traveling trajectory of the moving vehicle in the target direction, a contour of the moving vehicle, and a travelable lane predicted in a previous shot.

It should be understood that, when the trajectory model is constructed based on the traveling trajectory of the vehicle in the target direction, and the lane model is constructed based on the trajectory model in the target direction and the preset lateral deviation, a sensor needs to be used to detect and track a traveling vehicle, and whether the vehicle in the target direction travels along the lane is determined based on a traveling trajectory of the tracked vehicle ahead, a relationship between the vehicle and a predicted lane, a position relationship between vehicles, and the like.

Specifically, a trajectory of the vehicle (including a state variable included in the trajectory), a contour of the vehicle, and coordinates of the travelable lane in a same coordinate system may be obtained based on the travelable lane predicted in the previous shot, the traveling trajectory of the moving vehicle in the target direction, and the contour of the moving vehicle detected by using the sensor in the target direction. Using the foregoing variable states, a relative position relationship between a moving vehicle target and an occupied lane line may be obtained on an aerial view. Based on a historical trajectory of the vehicle traveling on the lane, a state of the moving vehicle (a speed and acceleration of the vehicle along the lane, a lateral speed and acceleration along the lane, a heading angle of the vehicle, a rotation angle rate of the vehicle, and the like), a position relationship between the vehicle and the lane (a lateral distance between the vehicle and the lane, an angle between the contour of the vehicle and the lane line, and the like), and a position relationship between the vehicle and vehicles ahead and behind (for example, when a vehicle travels slowly in close proximity on a same lane line, there is a high probability of changing lanes in the future), a future trajectory and a lane changing behavior of the target vehicle may be predicted.

S 1130: Predict a lane line in the target direction in a current shot based on a trajectory of a moving vehicle (namely, a moving vehicle predicted not to change a lane in the future) that travels along the lane and a lane line predicted in the previous shot.

Specifically, when it is determined that the moving vehicle in the target direction travels along the lane, motion trajectory coordinates (x, y) of the moving vehicle target may be used as an observed value to update the travelable lane line in the target direction. A condition for determining whether to update the travelable lane line in the target direction by using the motion trajectory of the moving vehicle target further includes whether a tracking quality condition (a tracking duration, a reliability, and the like) is met. The motion trajectory coordinates (x, y) of the moving vehicle target are used as an observed value, and a predicted travelable lane line model in the target direction is updated with reference to a lateral deviation distance between a contour of the moving vehicle and the lane line.

S1140: When a lateral deviation between the predicted lane line and the predicted trajectory of the moving vehicle traveling along the lane is greater than a specific threshold, determine that the trajectory of the vehicle is unstable and cannot be used to predict the travelable lane, delete the trajectory of the vehicle, and re-predict forward and backward lane lines.

Because predicting the travelable lane line by using a trajectory of the tracked vehicle and a contour of the tracked vehicle is based on an assumption that the moving vehicle travels along the lane, when the assumption is incorrectly determined, an error occurs in the predicted travelable lane line. To correct the error in time, it is necessary to use the predicted travelable lane line to verify whether the assumed condition holds true. To be specific, it is checked, based on the current predicted lane line, whether the assumption that the moving vehicle travels along the lane line holds true. That is, a condition that the contour of the moving vehicle is in the middle of predicted left and right lane lines is met, and a model parameter such as the motion trajectory of the vehicle and a direction angle of the lane line is less than a specific threshold. The threshold can be automatically adjusted based on curvature of the lane line.

S1150: Predict a third travelable lane based on the predicted lane line.

Specifically, if the target direction of the host vehicle is a forward direction, the third travelable lane is predicted based on the predicted lane line in the forward direction of the host vehicle. If the target direction of the host vehicle is a backward direction, the third travelable lane is predicted based on the predicted lane line in the backward direction of the host vehicle. If the target direction of the host vehicle is a forward direction and a backward direction, a forward lane model (namely, a forward travelable lane) and a backward lane model (namely, a backward travelable lane) are separately constructed based on predicted lane lines in the forward direction and the backward direction of the host vehicle. Then, the forward lane model and the backward lane model are merged to predict the third travelable lane. For a process of merging the forward lane model and the backward lane model, refer to description in the method 600.

Optionally, the correcting the first travelable lane based on the third travelable lane may be understood as obtaining a new travelable lane based on the first travelable lane and the third travelable lane. The new travelable lane is a travelable lane obtained after the first travelable lane is corrected. Optionally, the new travelable lane may be a weighted sum result of the first travelable lane and the third travelable lane. Optionally, the new travelable lane may alternatively be determined based on respective confidence levels of the first travelable lane and the third travelable lane. This is not limited in this application. It should be further understood that in particular, if a lane line is blocked or there is no lane line, the third travelable lane may be directly used as the first travelable lane.

Optionally, in an actual operation, lane models may be further constructed by using forward lane line information and a traveling trajectory of a vehicle in the backward direction, and then the obtained two forward and backward lane models are merged and predicted by using the method 600, to obtain the travelable lane. Alternatively, a lane model may be constructed by using a forward lane line and a lane model may be constructed by using a traveling trajectory of a vehicle in the forward direction, and then the lane models obtained by using the two are merged and predicted in a manner of a weighted sum, a confidence level, or the like, to obtain the travelable lane. A combination manner is not limited in this application.

In this embodiment of this application, the traveling trajectory of the vehicle in the target direction of the host vehicle may be obtained, the third travelable lane is predicted based on the traveling trajectory of the vehicle in the target direction of the host vehicle, and then the first travelable lane predicted based on the lane line is corrected based on the third travelable lane, so that the travelable lane can be predicted in a scenario of missing lane lines or no lane lines. In this way, accuracy and reliability of predicting the travelable lane can be further improved. In addition, in a complex urban road environment, continuity of predicting the travelable lane can be further ensured. For example, when the lane line cannot be detected or cannot be detected clearly, the travelable lane may also be predicted based on the traveling trajectory of the vehicle in the target direction of the host vehicle.

Optionally, the lane line, the traveling trajectory of the vehicle, and the border of the freespace may be combined to predict the travelable lane, so that accuracy and reliability of predicting the travelable lane can be further improved.

Optionally, the method 400 may further include: calculating first curvature of the first travelable lane based on the first travelable lane and a heading angle of the host vehicle; and correcting the first travelable lane based on the first curvature. Optionally, the heading angle of the host vehicle may be obtained by using a global positioning system (global positioning system, GPS).

It should be understood that in a low-speed congestion scenario, because a detection range for the lane line is limited, it is difficult to provide an accurate road curvature parameter. Therefore, in this embodiment of this application, the first curvature of the first travelable lane is calculated based on the predicted first travelable lane and the predicted heading angle of the host vehicle, so that real-time performance and accuracy of calculating the road curvature can be improved. In addition, the first travelable lane is corrected based on the first curvature, so that accuracy and reliability of predicting the travelable lane can be further improved.

Specifically, a lateral distance from the host vehicle to a lane line may be calculated based on the first travelable lane. Then, the first curvature of the host vehicle lane in the first travelable lane is calculated by using the heading angle of the host vehicle and the lateral distance as input variables and using a vehicle dynamics model and a correlation between road curvature and a steering wheel angle.

The following describes a process of calculating the first curvature with reference to formulas (4) to (9).

Specifically, a changing model of a vehicle motion state is established according to a vehicle dynamic equation. The vehicle motion state includes $\beta$, namely, an included angle (a sideslip angle) between a vehicle speed direction and a vehicle direction. $r$ is a rotation angle rate of the vehicle. $phi$ is a heading angle of the vehicle. $d$ is a lateral distance from the vehicle to a lane line. A control quantity $\delta_f$ is the steering wheel angle. An external interference input $\rho_{ref}$ affects motion of the vehicle, and is the first road curvature that needs to be calculated.

First, the vehicle dynamic equation is shown in the following formula (4):

$$\begin{bmatrix} \dot{\beta} \\ \dot{r} \\ \dot{phi} \\ \dot{d} \end{bmatrix} = \begin{bmatrix} a_{11} & a_{12} & 0 & 0 \\ a_{21} & a_{22} & 0 & 0 \\ 0 & 1 & 0 & 0 \\ v & l_S & v & 0 \end{bmatrix} \begin{bmatrix} \beta \\ r \\ phi \\ d \end{bmatrix} + \begin{bmatrix} b_{11} \\ b_{21} \\ 0 \\ 0 \end{bmatrix} \delta_f - \begin{bmatrix} 0 \\ 0 \\ v \\ 0 \end{bmatrix} \rho_{ref} \qquad (4)$$

$\rho_{ref}$ is the first curvature that needs to be calculated. *phi* is the heading angle of the vehicle. *d* is the lateral distance from the vehicle to the lane line. $\delta_f$ is the steering wheel angle. $\beta$ is the included angle (the sideslip angle) between the vehicle speed direction and the vehicle direction. *r* is the rotation angle rate of the vehicle. $l_S$ is a distance from a center of gravity of the vehicle to a front of the vehicle. *v* is a vehicle speed.

A formula of the road curvature (namely, the first curvature) and the steering wheel angle is as follows:

$$\rho_{ref} = \alpha + \gamma \delta_f \qquad (5)$$

$\rho_{ref}$ is the first curvature that needs to be calculated. $\delta_f$ is the steering wheel angle. $\alpha$ and $\gamma$ are constants. That is, the road curvature and the steering wheel angle are in a linear proportional relationship. The two parameters may be obtained by using a product parameter manual or measurement statistics.

From the foregoing formulas (4) and (5), a state observation equation may be obtained according to a state change equation. That is, a value of a hidden state *X* is obtained through an observed output *y*, as shown below:

The road curvature, namely, the first curvature, is calculated based on the following formulas:

$$\dot{X} = A\hat{X} - B + L(y - C)\hat{X} \qquad (6)$$

$$y = \begin{bmatrix} phi \\ d \end{bmatrix} \qquad (7)$$

$$\hat{X} = \begin{bmatrix} \beta & r & phi & d & \delta_f & \dot{\delta_f} \end{bmatrix}^T \qquad (8)$$

$$A = \begin{bmatrix} a_{11} & a_{12} & 0 & 0 & b_{11} & 0 \\ a_{21} & a_{22} & 0 & 0 & b_{21} & 0 \\ 0 & 1 & 0 & 0 & -\gamma v & 0 \\ v & l_S & v & 0 & 0 & 0 \\ 0 & 0 & 0 & 0 & 0 & 1 \\ 0 & 0 & 0 & 0 & 0 & 0 \end{bmatrix} \qquad (9)$$

C = [0 0 1 1 0 0], and B = [0 0 v 0 0 0]$^T$. L is an observer parameter. The observer parameter L is designed so that an observer can estimate the road curvature of the vehicle by using a distance to the front of the vehicle and the heading angle of the vehicle and with reference to a linear relationship between the vehicle steering wheel and the traveling road curvature.

Optionally, the method 400 may further include: determining second curvature of the first travelable lane based on a navigation map and a GPS; and correcting the first travelable lane based on the second curvature.

It should be understood that in a low-speed congestion scenario, because a detection range for the lane line is limited, it is difficult to provide an accurate road curvature parameter. In this embodiment of this application, the second curvature of the first travelable lane may be determined based on the navigation map and the GPS, so that real-time performance and accuracy of calculating the road curvature can be improved. In addition, the first travelable lane is corrected based on the second curvature, so that accuracy and reliability of predicting the travelable lane can be further improved.

Optionally, the method 400 may further include: performing path planning based on the first travelable lane.

Optionally, the performing path planning based on the first travelable lane may be understood as using the first travelable lane as a lateral reference trajectory for lane keeping, namely, a lateral constraint condition. In this way, lane keeping performance in a vehicle traveling process can be improved while improving security and reliability of path planning. It may also be understood that the first travelable lane is used as a constraint condition for lane allocation. To be specific, other vehicles traveling near the host vehicle is allocated to their respective lanes based on the first travelable lane, and lateral and longitudinal trajectories of the host vehicle are planned with reference to a traffic rule. In this way, lane keeping performance in a vehicle traveling process can be improved while improving security and reliability of path planning.

Optionally, the method 400 may further include: performing path planning based on the first travelable lane and the freespace.

It should be understood that the performing path planning based on the first travelable lane and the freespace may be understood as using the first travelable lane and the freespace as constraint conditions for lateral path planning. In this way, lane keeping performance in a vehicle traveling process can be improved while improving security and reliability of path planning.

Optionally, the method 400 may further include: predicting, based on a historical traveling trajectory of the vehicle in the target direction of the host vehicle, a traveling trajectory of the vehicle in the target direction of the host vehicle in a future target time period, where the target direction includes the forward direction and/or the backward direction; and performing path planning based on the first travelable lane and the traveling trajectory of the vehicle in the target direction of the host vehicle in the future target time period.

In this embodiment of this application, path planning may be performed based on the predicted first travelable lane and the traveling trajectory of the vehicle in the target direction of the host vehicle in the future target time period. To be specific, the first travelable lane and the traveling trajectory of the vehicle in the target direction of the host vehicle in the future target time period are used as constraint conditions for lateral path planning. In this way, lane keeping performance in a vehicle traveling process can be improved while improving security and reliability of path planning.

Optionally, path planning may be further performed based on the first travelable lane, and a contour border and a traveling trajectory (as shown in FIG. 12) of the vehicle in the target direction of the host vehicle in the future target time period, so that the host vehicle can avoid a vehicle in the target direction during path planning, thereby avoiding collision. In this way, lane keeping performance in a vehicle traveling process can be improved while improving security and reliability of path planning.

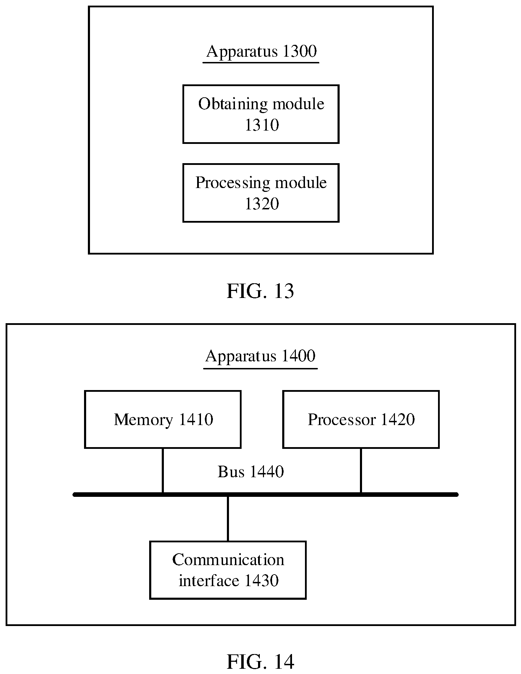

FIG. 13 is an example diagram of an apparatus for predicting a travelable lane according to an embodiment of this application. As shown in FIG. 13, the apparatus 1300 includes an obtaining module 1310 and a processing module 1320.

The obtaining module 1310 is configured to obtain forward lane line information of a host vehicle and backward lane line information of the host vehicle.

The processing module 1320 is configured to: construct a first lane model based on the forward lane line information of the host vehicle; construct a second lane model based on the backward lane line information of the host vehicle; and predict a first travelable lane based on the first lane model and the second lane model.

Optionally, the forward lane line of the host vehicle may be detected by using a lidar.

Optionally, the processing module 1320 may be further configured to: associate lane lines in the first lane model and the second lane model with lane line sequence numbers; determine whether lane lines associated with a same lane line sequence number in the first lane model and the second lane model are matched; supplement matched lane lines in the first lane model and the second lane model; and predict the first travelable lane based on supplemented lane lines.

Optionally, the obtaining module 1310 may be further configured to: obtain a border of a freespace in a target direction of the host vehicle, where the target direction includes a forward direction and/or a backward direction, and the border of the freespace is determined based on at least one of a road border, a dynamic obstacle border, and a static obstacle border. The processing module 1320 is further configured to: predict a second travelable lane based on the border of the freespace in the target direction of the host vehicle; and correct the first travelable lane based on the second travelable lane.

Optionally, the processing module 1320 may be further configured to: construct a border model based on feature information of the border of the freespace in the target direction of the host vehicle, where the feature information includes at least one of a border position, an angle, a type, a confidence level, and the like; and predict the second travelable lane based on the border model, a position of the host vehicle, and a preset lane width.

Optionally, the obtaining module 1310 may be further configured to obtain a traveling trajectory of a vehicle in the target direction of the host vehicle, where the target direction includes the forward direction and/or the backward direction. The processing module 1320 is further configured to: predict a third travelable lane based on the traveling trajectory of the vehicle in the target direction of the host vehicle; and correct the first travelable lane based on the third travelable lane.

Optionally, the processing module 1320 may be further configured to: construct a trajectory model based on the traveling trajectory of the vehicle in the target direction of the host vehicle; and predict the third travelable lane based on the trajectory model and a preset lateral deviation.

Optionally, the processing module 1320 may be further configured to: calculate first curvature of the first travelable lane based on the first travelable lane and a heading angle of the host vehicle; and correct the first travelable lane based on the first curvature.

Optionally, the processing module 1320 may be further configured to: calculate a lateral distance from the host vehicle to a lane line based on the first travelable lane; and calculate the first curvature of the first travelable lane by using the heading angle of the host vehicle and the lateral distance as input variables and using a vehicle dynamics model and a correlation between road curvature and a steering wheel angle.

Optionally, the heading angle of the host vehicle may be obtained by using a global positioning system GPS.

Optionally, the processing module 1320 may be further configured to: determine second curvature of the first travelable lane based on a navigation map and a GPS; and correct the first travelable lane based on the second curvature.

Optionally, the processing module 1320 may be further configured to: predict, based on a historical traveling trajectory of the vehicle in the target direction of the host vehicle, a traveling trajectory of the vehicle in the target direction of the host vehicle in a future target time period, where the target direction includes the forward direction and/or the backward direction; and perform path planning based on the first travelable lane and the traveling trajectory of the vehicle in the target direction of the host vehicle in the future target time period.

FIG. 14 is an example block diagram of a hardware structure of an apparatus according to an embodiment of this application. Optionally, the apparatus 1400 may be specifically a computer device. The apparatus 1400 includes a memory 1410, a processor 1420, a communication interface 1430, and a bus 1440. Communication connections between the memory 1410, the processor 1420, and the communication interface 1430 are implemented through the bus 1440.

The memory 1410 may be a read-only memory (read only memory, ROM), a static storage device, a dynamic storage device, or a random access memory (random access memory, RAM). The memory 1410 may store a program. When the program stored in the memory 1410 is executed by the processor 1420, the processor 1420 is configured to perform the steps in the method for predicting a travelable lane in the embodiments of this application.

The processor 1420 may be a general-purpose central processing unit (central processing unit, CPU), a microprocessor, an application-specific integrated circuit (application specific integrated circuit, ASIC), a graphics processing unit (graphics processing unit, GPU), or one or more integrated circuits, and is configured to execute a related program, to implement the method for predicting a travelable lane in the embodiments of this application.

Alternatively, the processor 1420 may be an integrated circuit chip and has a signal processing capability. In an implementation process, the method for predicting a travelable lane in this application may be performed by using an integrated logic circuit of hardware in the processor 1420 or instructions in a form of software.

Alternatively, the processor 1420 may be a general-purpose processor, a digital signal processor (digital signal processing, DSP), an application-specific integrated circuit (ASIC), a programmable gate array (field programmable gate array, FPGA) or another programmable logic device, a discrete gate or transistor logic device, or a discrete hardware component. The methods, steps, and logical block diagrams that are disclosed in the embodiments of this application may be implemented or performed. The general-purpose processor may be a microprocessor, or the processor may be any conventional processor or the like. The steps of the methods disclosed with reference to the embodiments of this application may be directly performed by a hardware decoding processor, or may be performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1410. The processor 1420 reads information in the memory 1410, and in combination with hardware of the processor 1420, performs functions that need to be performed by the modules included in the apparatus in the embodiments of this application, or performs the method for predicting a travelable lane in the method embodiments of this application.

The communication interface 1430 uses a transceiver apparatus, such as, but not limited to, a transceiver, to implement communication between the apparatus 1400 and another device or a communication network.

The bus 1440 may include a path for transferring information between various components (for example, the memory 1410, the processor 1420, and the communication interface 1430) of the apparatus 1400.

An embodiment of this application further provides a vehicle, including the apparatus for predicting a travelable lane in the apparatus embodiments of this application.

An embodiment of this application further provides a computing device, including at least one processor and a memory. The at least one processor is coupled to the memory and is configured to read and execute instructions in the memory, to perform the method for predicting a travelable lane in the method embodiments of this application.

An embodiment of this application further provides a computer program product including instructions. When the computer program product runs on a computer, the computer is enabled to perform the method for predicting a travelable lane in the method embodiments of this application.

An embodiment of this application further provides a computer-readable medium. The computer-readable medium stores program code. When the program code runs on a computer, the computer is enabled to perform the method for predicting a travelable lane in the method embodiments of this application.

An embodiment of this application further provides a chip. The chip includes a processor and a data interface. The processor reads, through the data interface, instructions stored in a memory, to perform the method for predicting a travelable lane in the method embodiments of this application.

Optionally, as an implementation, the chip may further include a memory. The memory stores instructions. The processor is configured to execute the instructions stored in the memory. When the instructions are executed, the processor is configured to perform the method for predicting a travelable lane in the method embodiments of this application.

Terms such as "component", "module", and "system" used in this specification are used to indicate computer-related entities, hardware, firmware, a combination of hardware and software, software, or software being executed. For example, a component may be, but is not limited to, a process running on a processor, a processor, an object, an executable file, a thread of execution, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process, for example, based on a signal having one or more data packets (for example, data from two components interacting with another component in a local system, a distributed system, and/or across a network such as the Internet interacting with other systems by using the signal).

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for predicting a travelable lane, comprising:

   obtaining forward lane line information of a host vehicle and backward lane line information of the host vehicle;
   constructing a first lane model based on the forward lane line information of the host vehicle;
   constructing a second lane model based on the backward lane line information of the host vehicle; and
   predicting a first travelable lane based on the first lane model and the second lane model.

2. The method according to claim 1, wherein the forward lane line of the host vehicle is detected by using a lidar.

3. The method according to claim 1 or 2, wherein the predicting a first travelable lane based on the first lane model and the second lane model comprises:

   associating lane lines in the first lane model and the second lane model with lane line sequence numbers;
   determining whether lane lines associated with a same lane line sequence number in the first lane model and the second lane model are matched;
   supplementing matched lane lines in the first lane model and the second lane model; and
   predicting the first travelable lane based on supplemented lane lines.

4. The method according to any one of claims 1 to 3, wherein the method further comprises:

   obtaining a border of a freespace in a target direction of the host vehicle, wherein the target direction comprises a forward direction and/or a backward direction, and the border of the freespace is determined based on at least one of a road border, a dynamic obstacle border, and a static obstacle border;

predicting a second travelable lane based on the border of the freespace in the target direction of the host vehicle; and

correcting the first travelable lane based on the second travelable lane.

5. The method according to claim 4, wherein the predicting a second travelable lane based on the border of the freespace in the target direction of the host vehicle comprises:

constructing a border model based on feature information of the border of the freespace in the target direction of the host vehicle, wherein the feature information comprises at least one of a border position, an angle, a type, and a confidence level; and

predicting the second travelable lane based on the border model, a position of the host vehicle, and a preset lane width.

6. The method according to any one of claims 1 to 5, wherein the method further comprises:

obtaining a traveling trajectory of a vehicle in the target direction of the host vehicle, wherein the target direction comprises the forward direction and/or the backward direction;

predicting a third travelable lane based on the traveling trajectory of the vehicle in the target direction of the host vehicle; and

correcting the first travelable lane based on the third travelable lane.

7. The method according to claim 6, wherein the predicting a third travelable lane based on the traveling trajectory of the vehicle in the target direction of the host vehicle comprises:

constructing a trajectory model based on the traveling trajectory of the vehicle in the target direction of the host vehicle; and

predicting the third travelable lane based on the trajectory model and a preset lateral deviation.

8. The method according to any one of claims 1 to 7, wherein the method further comprises:

calculating first curvature of the first travelable lane based on the first travelable lane and a heading angle of the host vehicle; and

correcting the first travelable lane based on the first curvature.

9. The method according to claim 8, wherein the calculating first curvature of the first travelable lane based on the first travelable lane and a heading angle of the host vehicle comprises:

calculating a lateral distance from the host vehicle to a lane line based on the first travelable lane; and

calculating the first curvature of the first travelable lane by using the heading angle of the host vehicle and the lateral distance as input variables and using a vehicle dynamics model and a correlation between road curvature and a steering wheel angle.

10. The method according to claim 8, wherein the heading angle of the host vehicle is obtained by using a global positioning system GPS.

11. The method according to any one of claims 1 to 7, wherein the method further comprises:

determining second curvature of the first travelable lane based on a navigation map and a global positioning system GPS; and

correcting the first travelable lane based on the second curvature.

12. The method according to any one of claims 1 to 11, wherein the method further comprises:

predicting, based on a historical traveling trajectory of the vehicle in the target direction of the host vehicle, a traveling trajectory of the vehicle in the target direction of the host vehicle in a future target time period, wherein the target direction comprises the forward direction and/or the backward direction; and

performing path planning based on the first travelable lane and the traveling trajectory of the vehicle in the target direction of the host vehicle in the future target time period.

13. An apparatus for predicting a travelable lane, comprising an obtaining module and a processing module, wherein

the obtaining module is configured to obtain forward lane line information of a host vehicle and backward lane line information of the host vehicle; and
the processing module is configured to: construct a first lane model based on the forward lane line information of the host vehicle; construct a second lane model based on the backward lane line information of the host vehicle; and predict a first travelable lane based on the first lane model and the second lane model.

14. The apparatus according to claim 13, wherein the forward lane line of the host vehicle is detected by using a lidar.

15. The apparatus according to claim 13 or 14, wherein the processing module is further configured to:
associate lane lines in the first lane model and the second lane model with lane line sequence numbers; determine whether lane lines associated with a same lane line sequence number in the first lane model and the second lane model are matched; supplement matched lane lines in the first lane model and the second lane model; and predict the first travelable lane based on supplemented lane lines.

16. The apparatus according to any one of claims 13 to 15, wherein the obtaining module is further configured to:

obtain a border of a freespace in a target direction of the host vehicle, wherein the target direction comprises a forward direction and/or a backward direction, and the border of the freespace is determined based on at least one of a road border, a dynamic obstacle border, and a static obstacle border; and
the processing module is further configured to: predict a second travelable lane based on the border of the freespace in the target direction of the host vehicle; and correct the first travelable lane based on the second travelable lane.

17. The apparatus according to claim 16, wherein the processing module is further configured to:
construct a border model based on feature information of the border of the freespace in the target direction of the host vehicle, wherein the feature information comprises at least one of a border position, an angle, a type, and a confidence level; and predict the second travelable lane based on the border model, a position of the host vehicle, and a preset lane width.

18. The apparatus according to any one of claims 13 to 17, wherein the obtaining module is further configured to:

obtain a traveling trajectory of a vehicle in the target direction of the host vehicle, wherein the target direction comprises the forward direction and/or the backward direction; and
the processing module is further configured to: predict a third travelable lane based on the traveling trajectory of the vehicle in the target direction of the host vehicle; and correct the first travelable lane based on the third travelable lane.

19. The apparatus according to claim 18, wherein the processing module is further configured to:
construct a trajectory model based on the traveling trajectory of the vehicle in the target direction of the host vehicle; and predict the third travelable lane based on the trajectory model and a preset lateral deviation.

20. The apparatus according to any one of claims 13 to 19, wherein the processing module is further configured to:
calculate first curvature of the first travelable lane based on the first travelable lane and a heading angle of the host vehicle; and correct the first travelable lane based on the first curvature.

21. The apparatus according to claim 20, wherein the processing module is further configured to:
calculate a lateral distance from the host vehicle to a lane line based on the first travelable lane; and calculate the first curvature of the first travelable lane by using the heading angle of the host vehicle and the lateral distance as input variables and using a vehicle dynamics model and a correlation between road curvature and a steering wheel angle.

22. The apparatus according to claim 20, wherein the heading angle of the host vehicle is obtained by using a global positioning system GPS.

**23.** The apparatus according to any one of claims 13 to 19, wherein the processing module is further configured to: determine second curvature of the first travelable lane based on a navigation map and a global positioning system GPS; and correct the first travelable lane based on the second curvature.

**24.** The apparatus according to any one of claims 13 to 23, wherein the processing module is further configured to: predict, based on a historical traveling trajectory of the vehicle in the target direction of the host vehicle, a traveling trajectory of the vehicle in the target direction of the host vehicle in a future target time period, wherein the target direction comprises the forward direction and/or the backward direction; and perform path planning based on the first travelable lane and the traveling trajectory of the vehicle in the target direction of the host vehicle in the future target time period.

**25.** An apparatus for predicting a travelable lane, comprising an input/output interface, a processor, and a memory, wherein the processor is configured to control the input/output interface to send and receive a signal or information, the memory is configured to store a computer program, and the processor is configured to invoke the computer program from the memory and run the computer program, so that the apparatus for predicting the travelable lane performs the method according to any one of claims 1 to 12.

**26.** A vehicle, comprising the apparatus for predicting the travelable lane according to any one of claims 13 to 25.

**27.** A computer-readable storage medium, wherein the computer-readable storage medium stores program code to be executed by a device, and the program code comprises instructions for performing the method according to any one of claims 1 to 12.

**28.** A computing device, comprising at least one processor and a memory, wherein the at least one processor is coupled to the memory and is configured to read and execute instructions in the memory, to perform the method according to any one of claims 1 to 12.

FIG. 1

Sensing system
120

Global
positioning
system 121

Inertial
measurement
unit 122

Lidar 123

Millimeter-
wave radar 124

Ultrasonic
radar 125

Camera
apparatus 126

Computing
platform 150

Processor 151

Memory 152

Instruction
153

Vehicle 100

FIG. 2

300

| Sensing module 310 | Prediction module 320 | Regulation and control module 330 | Actuator 340 |

FIG. 3

400

S410: Obtain forward lane line information of a host vehicle and backward lane line information of the host vehicle

S420: Construct a first lane model based on the forward lane line information of the host vehicle

S430: Construct a second lane model based on the backward lane line information of the host vehicle

S440: Predict a first travelable lane based on the first lane model and the second lane model

FIG. 4

L   H   R

H

Match and merge

Match and merge

L   H   R

(a)

(b)

(c)

FIG. 5

600

| S610: Associate lane lines in a first lane model and a second lane model with lane line sequence numbers |
|---|

| S620: Determine whether lane lines associated with a same lane line sequence number in the first lane model and the second lane model are matched |
|---|

| S630: Supplement matched lane lines in the first lane model and the second lane model |
|---|

| S640: Predict a first travelable lane based on supplemented lane lines |
|---|

FIG. 6

Road border

Dynamic obstacle border

Host vehicle   Parked vehicle

Traveling vehicle

Static obstacle border

FIG. 7

800

| S810: Detect a freespace in a target direction of a host vehicle, and perform modeling on the detected freespace |
|---|
| S820: Extract a border of the freespace, and distinguish between a road border, a dynamic obstacle border, and a static obstacle border |
| S830: Extract feature information of the border of the freespace, and establish a border model |
| S840: Predict a second travelable lane based on the border model, a position of the host vehicle, and a preset lane width |

FIG. 8

FIG. 9

FIG. 10

1100

S1110: Construct a motion trajectory model of a vehicle based on a traveling trajectory of the vehicle in a target direction

S1120: Predict a future trajectory of a moving vehicle in the target direction and determine whether the moving vehicle is to change a lane, with reference to a traveling trajectory of the moving vehicle in the target direction, a contour of the moving vehicle, and a travelable lane predicted in a previous shot

S1130: Predict a lane line in the target direction in a current shot based on a trajectory of a moving vehicle that travels along the lane and a lane line predicted in the previous shot

S1140: When a lateral deviation between the predicted lane line and the predicted trajectory of the moving vehicle traveling along the lane is greater than a specific threshold, determine that the trajectory of the vehicle is unstable and cannot be used to predict the travelable lane, delete the trajectory of the vehicle, and re-predict forward and backward lane lines

S1150: Predict a third travelable lane based on a predicted lane line

FIG. 11

Host vehicle

FIG. 12

Apparatus 1300

Obtaining module
1310

Processing module
1320

FIG. 13

Apparatus 1400

Memory 1410

Processor 1420

Bus 1440

Communication
interface 1430

FIG. 14

## INTERNATIONAL SEARCH REPORT

| International application No. |
| --- |
| **PCT/CN2021/133478** |

**A.    CLASSIFICATION OF SUBJECT MATTER**

G08G 1/01(2006.01)i;  G06K 9/62(2022.01)i

According to International Patent Classification (IPC) or to both national classification and IPC

**B.    FIELDS SEARCHED**

Minimum documentation searched (classification system followed by classification symbols)

G08G G06K

Documentation searched other than minimum documentation to the extent that such documents are included in the fields searched

Electronic data base consulted during the international search (name of data base and, where practicable, search terms used)

CNPAT, CNKI, WPI, EPODOC: 车道线, 预测, 车道, 前向, 前方, 后向, 后方, 模型, 障碍, 边界, 轨迹, 融合, 匹配, 修正, 跟踪, lane w line, predict+, lane?, forward, backward, model+, obstacle?, boundary, trajectory, fusion, match+, correct+, track+

**C.    DOCUMENTS CONSIDERED TO BE RELEVANT**

| Category* | Citation of document, with indication, where appropriate, of the relevant passages | Relevant to claim No. |
| --- | --- | --- |
| X | CN 112885074 A (HUAWEI TECHNOLOGIES CO., LTD.) 01 June 2021 (2021-06-01) description, paragraphs [0042]-[0053] and [0075]-[0100], and figures 1-8 | 1-5, 8-11, 13-17, 20-23, 25-28 |
| Y | CN 112885074 A (HUAWEI TECHNOLOGIES CO., LTD.) 01 June 2021 (2021-06-01) description, paragraphs [0042]-[0053] and [0075]-[0100], and figures 1-8 | 6-7, 12, 18-19, 24 |
| Y | CN 113165670 A (HUAWEI TECHNOLOGIES CO., LTD.) 23 July 2021 (2021-07-23) description, paragraphs [0070]-[0112], and figures 1-17 | 6-7, 12, 18-19, 24 |
| X | CN 102398598 A (GM GLOBAL TECHNOLOGY OPERATIONS LLC) 04 April 2012 (2012-04-04) description, paragraphs [0008]-[0037], and figures 1-11 | 1, 13, 25-28 |
| X | CN 108162867 A (NINGBO GEELY AUTOMOBILE RESEARCH & DEVELOPMENT CO., LTD. et al.) 15 June 2018 (2018-06-15) description, paragraphs [0052]-[0080], and figures 1-6 | 1, 13, 25-28 |
| A | CN 112706785 A (CHONGQING CHANG'AN AUTOMOBILE CO., LTD.) 27 April 2021 (2021-04-27) entire document | 1-28 |
| A | CN 103940434 A (XI'AN JIAOTONG UNIVERSITY) 23 July 2014 (2014-07-23) entire document | 1-28 |

☑ Further documents are listed in the continuation of Box C.          ☑ See patent family annex.

| *     Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **04 August 2022** | **25 August 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/133478**

**C.    DOCUMENTS CONSIDERED TO BE RELEVANT**

| Category* | Citation of document, with indication, where appropriate, of the relevant passages | Relevant to claim No. |
|---|---|---|
| A | US 2020377087 A1 (SF MOTORS, INC.) 03 December 2020 (2020-12-03)<br>entire document | 1-28 |

**EP 4 425 462 A1**

| INTERNATIONAL SEARCH REPORT Information on patent family members | | | | International application No. PCT/CN2021/133478 | | | |
|---|---|---|---|---|---|---|---|

| Patent document cited in search report | | | Publication date (day/month/year) | Patent family member(s) | | | Publication date (day/month/year) |
|---|---|---|---|---|---|---|---|
| CN | 112885074 | A | 01 June 2021 | WO | 2021103651 | A1 | 03 June 2021 |
| CN | 113165670 | A | 23 July 2021 | | None | | |
| CN | 102398598 | A | 04 April 2012 | US | 2012062747 | A1 | 15 March 2012 |
| | | | | DE | 102011107190 | A1 | 26 January 2012 |
| | | | | US | 9090263 | B2 | 28 July 2015 |
| | | | | CN | 102398598 | B | 24 February 2016 |
| CN | 108162867 | A | 15 June 2018 | | None | | |
| CN | 112706785 | A | 27 April 2021 | | None | | |
| CN | 103940434 | A | 23 July 2014 | CN | 103940434 | B | 15 December 2017 |
| US | 2020377087 | A1 | 03 December 2020 | CN | 113939828 | A | 14 January 2022 |
| | | | | WO | 2020243195 | A1 | 03 December 2020 |

Form PCT/ISA/210 (patent family annex) (January 2015)

32